# EUROPEAN PATENT SPECIFICATION

(11) **EP 2 661 017 B1**
(45) Date of publication and mention of the grant of the patent: **17.12.2014**
(21) Application number: 12166752.1
(22) Date of filing: 04.05.2012
(51) Int. Cl.: H04L 12/24

(54) **System and method for automated trap configuration in network management systems**
System und Verfahren zur Automatischen Fallenkonfiguration in Netzwerkverwaltungssystemen
Système et procédé de configuration automatique de piège dans des systèmes de gestion de réseau

(43) Date of publication of application: 06.11.2013
(73) Proprietor: Siemens Aktiengesellschaft, 80333 München (DE)
(72) Inventor: Shanbhag, Sanjay, 560070 Bangalore (IN); Mygapula, Sudheer, 560100 Bangalore (IN); Raman, Karthik, 560076 Bangalore (IN)

(56) References cited:
- EP-A2- 2 296 317
- US-A1- 2003 208 577
- LEVI NORTEL NETWORKS P MEYER SECURE COMPUTING CORPORATION B STEWART RETIRED D: "Simple Network Management Protocol (SNMP) Applications; rfc3413.txt", 20021201, 1 December 2002 (2002-12-01), XP015009207, ISSN: 0000-0003

## Description

The present invention relates generally to network management systems. In particular, the present invention relates to automated trap configuration in network management systems.

Network management systems are commonly implemented for configuring, monitoring and managing network devices coupled to a communication network. In typical network management systems, at least one management station is configured to communicate and manage multiple network devices, such as switches, routers, microwave radios, printers, workstations, programmable logic controllers, communication processors, and so on. Each network device is provided with an agent module that locally monitors and stores operational and event data related to the network device. The management station includes a management module which requests operational and event data and/or receives unsolicited notifications from the agent module using standard communication protocols.

The most commonly used communication protocol in such network management systems is Simple Network Management Protocol (SNMP). SNMP defines syntax and semantics of messages exchanged between the management and the agent modules.

Management Information Base (MIB) specifies information that a network device should provide to the management station. All data referring to managed features of the network device are referred to as objects, which are represented by MIB variables which can be queried or modified. MIB uses a hierarchical namespace such that each object is assigned a unique object identifier (OID). Each OID identifies an object that can be read or set via SNMP.

SNMP is based on a read-write paradigm to effect control and management operations. SNMP defines four basic commands, namely get-request, get-next-request, get-response, and set-request to enable basic read and write operations. In addition, SNMP defines a trap command, which enables an agent to asynchronously send event notifications to the management module.

In US 2003/208577 A1, a systems having a management console and one or more managed nodes is described. The management console has a network address and is connected to a network. Each managed node includes a network interface card for connecting with a network and an alert sending device for generating Alert Standards Forum Platform Event Traps in response to conditions at the managed node. The managed nodes are further able to receive Platform Event Trap destination address configuration packets and adopt the network address of the management consoles as the Platform Event Trap destination address.

EP 2 296 317 A2 refers to an information processing apparatus capable of correctly identifying an image professing apparatus from which an event notification has been transmitted. The information processing apparatus transmits to image processing apparatuses an event notification request packet that requests the image processing apparatuses to transmit an event notification upon occurrence of an event therein. Moreover, the event notification request packet acquires transmission source addresses from response packets sent from the MFPs in reply to the event notification request and registers the acquire addresses. When receiving an event notification packet from any of the image processing apparatuses, the information processing apparatus acquires a transmission source address from the event notification packet and compares the acquired address with the registered addresses. Further, the information processing apparatus determines that the image processing apparatuses from which the event notification packet has been transmitted is one of registered image processing apparatuses, if the acquired address coincides with one of the registered addresses.

In order to enable the agent module to send a trap to the management module, the agent module is required to be configured with trap destination information. The trap destination information includes, for example, an IP address/hostname of the management station, management port and management community.

In various systems available in the prior art, each network device must be manually configured with trap destination information. Typically, there are several tens or a few hundred agents that are managed by a management station. It is a tedious task to manually configure each agent for trap information, especially when a new management station comes in, or the IP address and/or port and/or community string of an existing management station changes. In a scenario, when relevant settings on the management station are changed or the management station is altogether replaced, the trap destination information must be manually reconfigured in each network device. In each case, a network administrator has to manually configure IP address and/or port and/or community string one by one in agent modules of each network device using a web interface or any other suitable configuration tool. Such manual configuration not only demands significant time and resources but also renders the network management system inflexible and difficult to maintain. This is a tedious and cumbersome to say the least. Moreover, in case it is desired to change association of a network device from one management station to another management station, such change also necessitates manual reconfiguration of the network device.

In light of the foregoing, there is a need for improved system and method for configuring trap information in individual network devices in various network management systems. The improved system and method should eliminate manual effort required for configuring trap information in individual network devices in various network management systems.

Accordingly, an object of the present invention is to provide a system and a method for automated trap configuration in multiple network devices in a network management system.

The object of the present invention is achieved by a method for automated trap configuration in a network management system according to claim 1, and a system and a computer program product therefor according to claim **5** and claim **9** respectively. Further embodiments of the present invention are addressed in the dependent claims.

In a first aspect of the present invention, a method for automated trap configuration in a network management system is provided. The network management system comprises at least one managing device and one or more managed devices. Each managed device is configurable for sending a trap message to the at least one managing device. According to the method of the present invention, in a first step, a trap configuration object is retrieved from at least one managed device. In a second step, the trap configuration object is parsed to determine availability of trap destination information corresponding to the managing device. The trap destination information corresponds to one or more network parameters of the managing device. In a third step, one or more configuration instructions from the managing device are transmitted to the at least one managed device based on availability of the trap destination information. The configuration instructions are such that the trap configuration object is processed such as to include the trap destination information corresponding to the managing device. Thus, the at least one managed device is configured to send a trap message to the managing device.

Thus, the present invention provides a method for automated trap configuration in individual network devices in a network management system. The technique of the present invention entirely eliminates any manual intervention in trap configuration in the network management system. Therefore, the techniques of the present invention facilitate reducing time and effort required in trap configuration while implementing any changes in the network management system. Hence, the present invention advantageously renders the network management system more flexible and conducive to systemic changes and restructuring.

**In accordance with the present invention,** a trap validation list is maintained in each managing device. The trap validation list comprises information related to the one or more managed devices along with a corresponding trap validation status. The trap validation status is set to a first status to indicate that corresponding managed device is to be configured to send a trap message to the managing device. On the other hand, the trap validation status is set to a second status to indicate that corresponding managed device is configured to send a trap message to the managing device. This technical feature advantageously enables the managing device to systematically keep a record of all managed devices and corresponding trap validation status. **Further,** the managing device initiates trap configuration **according to above steps** for all such managed devices that are to be configured to in clude trap destination information corresponding to the managing device.

In accordance with another embodiment of the present invention, at least one managed device is discovered, information related to the at least one managed device is appended to the trap validation list, and trap validation status corresponding to the at least one managed device is set to the first status. According to this technical feature, each new managed device which is detected through an auto-discovery process is advantageously included in the trap validation list. The trap validation status of such managed device is set to the first status such that subsequently, the managing device initiates automated trap configuration therefor.

In accordance with another embodiment of the present invention, one or more network parameters of the managing device are monitored, and the trap validation status is changed from the second status to the first status for each managed device in the trap validation list subsequent to an alteration of such network parameters of the managing device that are related to the trap destination information. According to this technical feature, subsequent to any changes in network parameters thereof, the managing device advantageously re-initiates automated trap configuration, as per the various techniques of the present invention, for each managed device.

In accordance with another embodiment of the present invention, the first, second, and third steps, as described above, are performed for each managed device for which the trap validation status in the trap validation list is set to the first status. Subsequent to performing these steps for the managed device, and confirming that the trap configuration object in said managed device is successfully processed, corresponding trap validation status in the trap validation list is set to the second status. This technical feature advantageously enables the managing device to systematically keep a record of all managed devices which are successfully configured for sending trap messages thereto.

In a second aspect of the present invention, a network management system adapted for automated trap configuration in a network management system is provided. The network management system comprises at least one managing device and one or more managed devices. Each managed device is configurable for sending a trap message to said at least one managing device. The managing device comprises a retrieving module, a processing module, and a transmitting module. The retrieving module is configured for retrieving a trap configuration object from at least one managed device. The processing module is configured for parsing the trap configuration object to determine availability of trap destination information corresponding to the managing device. The trap destination information corresponds to one or more network parameters of the managing device. The processing module is further configured for generating one or more configuration instructions based on availability of the trap destination information. The transmitting module is configured for transmitting the configuration instructions to the at least one managed device. The configuration instructions are such that the trap configuration object is processed such as to include the trap destination information corresponding to the managing device. Thus, the at least one managed device is configured to send a trap message to the managing device.

Thuc, the present invention provides a network management system adapted for automated trap configuration in individual network devices. The technique of the present invention entirely eliminates any manual intervention in trap configuration in the network management system. Therefore, the techniques of the present invention are facilitates reducing time and effort required towards trap configuration while implementing any changes in the network management system. Hence, the present invention advantageously renders the network management system more flexible and conducive to systemic changes and restructuring.

**In accordance with the present invention,** each managing device comprises a trap validation list. The trap validation list comprises information related to the one or more managed devices along with a corresponding trap validation status. The trap validation status is set to a first status to indicate that corresponding managed device is to be configured to send a trap message to the managing device. On the other hand, the trap validation status is set to a second status to indicate that corresponding managed device is configured to send a trap message to the managing device. This technical feature advantageously enables the managing device to systematically keep a record of all managed devices and corresponding trap validation status. **Moreover,** the managing device initiates trap configuration for all such managed devices that are not configured to include trap destination information corresponding to the managing device.

In accordance with another embodiment of the present invention, the network management system comprises a discovery module. The discovery module is configured for discovering at least one managed device, appending information related to the at least one managed device to the trap validation list, and setting trap validation status corresponding to the at least one managed device to the first status. According to this technical feature, each new managed device which is de tected through an auto-discovery process is advantageously included in the trap validation list. The trap validation status of such managed device is set to the first status such that subsequently, the managing device initiates automated trap configuration therefor.

In accordance with another embodiment of the present invention, the network management system comprises a reconfiguring module. The reconfiguring module is configured for monitoring one or more network parameters of the managing device, and changing the trap validation status for each managed device in the trap validation list from the second status to the first status subsequent to an alteration of such network parameters of the managing device that are related to the trap destination information. According to this technical feature, subsequent to any changes in network parameters thereof, the managing device advantageously re-initiates automated trap configuration, as per the various techniques of the present invention, for each managed device.

In accordance with another embodiment of the present invention, the retrieving module successively retrieves the trap configuration object for each managed device for which the trap validation status in the trap validation list is set to the first status, further wherein subsequent to transmitting the configuration instructions to the managed device, and confirming that the trap configuration object in the at least one managed device is successfully configured, the processing module sets the corresponding trap validation status in the trap validation list to the second status.

In a third aspect of the present invention, a computer program product for automated trap configuration in a network management system is provided. The computer program product is embodied on a computer readable medium. The computer-readable medium comprises computer-executable instructions for automated trap configuration in the network management system. Various other technical features in this aspect of the present invention correspond respectively to various technical features provided in the first and the second aspects of the present invention.

The present invention is further described hereinafter with reference to illustrated embodiments shown in the accompanying drawings, in which:
- FIG 1: illustrates a schematic representation of a network management system in accordance with an embodiment of the present invention,
- FIG 2: illustrates a schematic representation of a trap configuration object in accordance with an embodiment of the present invention,
- FIG 3: illustrates a schematic representation of a managing device in accordance with an embodiment of the present invention,
- FIG 4: illustrate a schematic representation of a trap validation list in accordance with an embodiment of the present invention,
- FIG 5: illustrates a sequence diagram for automated trap configuration in accordance with an embodiment of the present invention,
- FIG 6: illustrates a basic flowchart depicting a method for automated trap configuration in a network management system in accordance with an embodiment of the present invention, and
- FIG 7: illustrates a detailed flowchart depicting a method for automated trap configuration in a network management system in accordance with an embodiment of the present invention.

Various embodiments are described with reference to the drawings, wherein like reference numerals are used to refer to like elements throughout. In the following description, for purpose of explanation, numerous specific details are set forth in order to provide a thorough understanding of one or more embodiments. It may be evident that such embodiments may be practiced without these specific details.

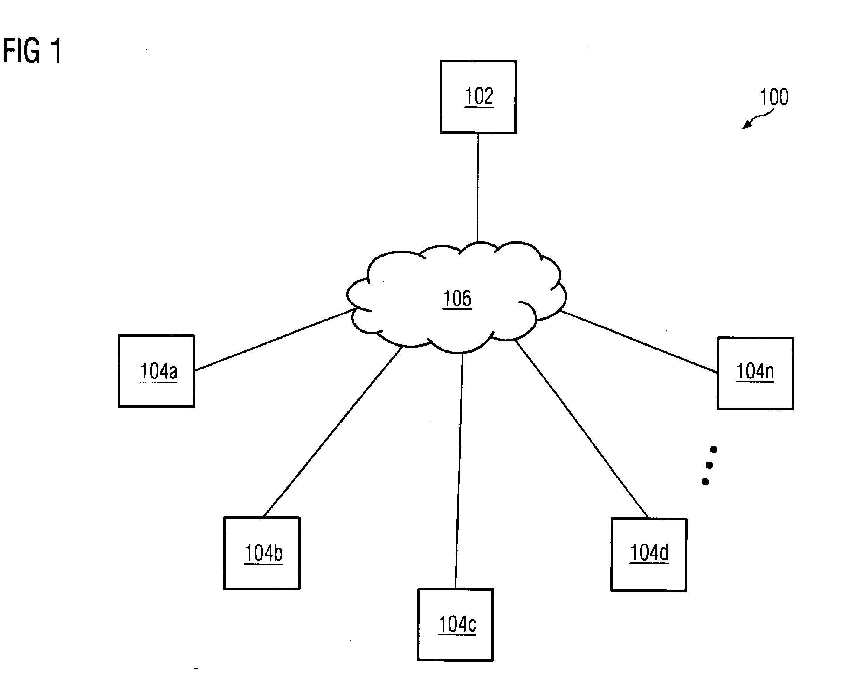

FIG 1 illustrates a schematic representation of a network management system 100 in accordance with an embodiment of the present invention.

As shown in the adjoining figure, the network management system 100 includes a managing device 102 and multiple managed devices 104a through 104n (hereinafter collectively referred to as managed devices 104 and individually referred to as managed device 104). The managing device 102 and the managed devices 104 are communicatively coupled to a communication network 106.

In one example, the managing device 102 is implemented as a dedicated computer workstation which realizes a management module (not shown). The managing device 102, through the management module, configures and monitors the managed devices 104. It should be noted that although the adjoining figure depicted only one managing device 102, multiple managing devices 102 may be implemented in a similar manner.

Various examples of the managed devices 104 include, but are not limited, switches, routers, microwave radios, printers, workstations, and so on. Each managed devices 104 realizes an agent module (not shown) that locally monitors and stores operational and event data related to the managed devices 104.

In various exemplary embodiments of the present invention, the communication network 106 is based on any suitable network architecture including, but not limited to, Local Area Network (LAN), Metropolitan Area Network (MAN), and Wide Area Network (WAN). In one example of the present invention, the communication network 106 is based on Simple Network Management Protocol (SNMP).

It should be noted that although the present invention is primarily being described in the context of SNMP Version 1.0 and 2.0 (and intermediate versions), various embodiments of the present invention described herein are applicable for various other versions of SNMP such as Version 3.0, which are currently available and also, such versions that may be specified in future, with minor modifications as will be readily apparent to a person ordinarily skilled in the art.

Each managed device 104 maintains a virtual data store, referred to as a management information base (MIB), which stores all data related to managed features of the managed device 104 as individual objects, wherein each object is assigned a unique object identifier (OID).

The managing device 102 is capable of reading data values stored in individual objects and also, writing desired data values to individual objects stored in the managed devices 104. In addition, the managed devices 104 are capable to sending unsolicited notifications to the managing device 102. Such unsolicited notification is referred to as a trap message.

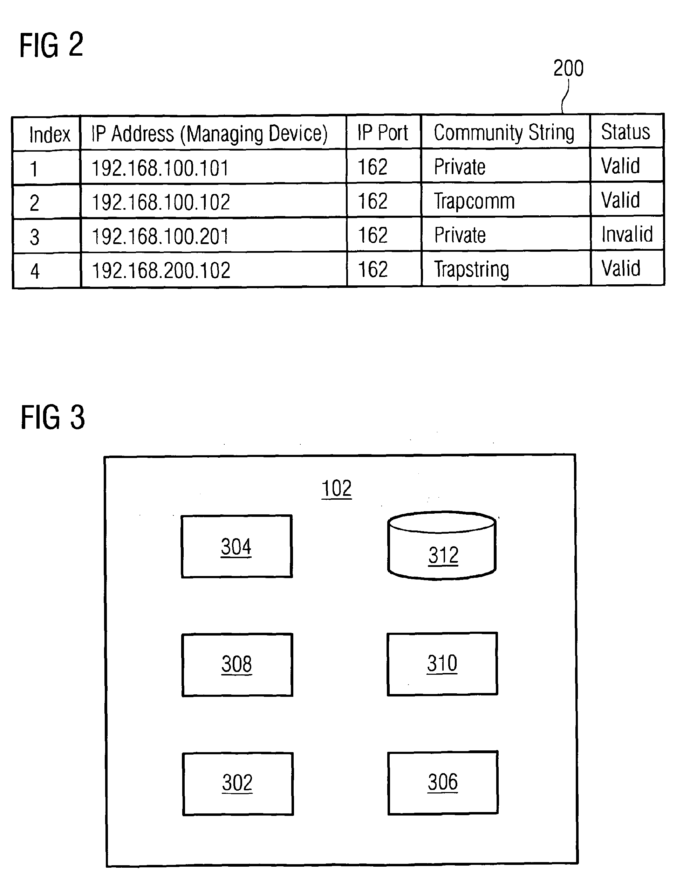

Towards this end, the managed device 104 requires trap destination information corresponding to one or more network parameters related to managing device 102. In one example, these network parameters include IP address/hostname, port, and community. Each managed devices 104 stores the trap destination information in a trap configuration object within the management information base. The trap configuration object is explained in conjunction with FIG 2 below.

Referring to FIG 2, a schematic representation of a trap configuration object 200 is shown. The trap configuration object 200 includes trap destination information required to send a trap message from the managed device 104 to managing device 102.

In the example shown in FIG 2, the trap configuration object 200 is in tabular format. The trap configuration object 200 includes columnar variables such as 'Index', 'IP address/hostname', 'Port', 'Community', and 'Status'.

The columnar variable 'Index' is used to uniquely address an individual row/entry in the trap configuration object 200. The columnar variable 'Status' is in accordance with SNMP specification and is required for managing individual rows/entries in the trap configuration object 200.

The remaining columnar variables 'IP address/hostname'; 'Port'; and 'Community' provide the required trap destination information such that a trap message may be appropriately configured such as to reach the managing device 102. In various examples, the trap destination information may correspond to additional or less network parameters corresponding to the managing device 102. As evident from the adjoining figure, each row/entry in the trap configuration object 200 corresponds to an individual managing device 102.

It should be noted that the trap configuration object 200 has been depicted as a tabular object only by way of example. In various exemplary embodiments of the present invention, the trap configuration object 200 may be implemented using any suitable data structure already known in the art or as may be developed in future. Further, it is possible that different managed devices 104 implement the trap configuration object 200 using different data structures. Further, the values depicted in FIG 2 are for exemplary purpose only and should not be construed to limit the present invention in any manner whatsoever.

Referring back to FIG 1, when an individual managed device 104 needs to send a trap message to the managing device 102, the managed device 104 looks up the trap configuration object 200 and prepares a trap messages for each managing device 102 for which the trap destination information is included in the trap configuration object 200.

Referring to FIG 3, a schematic representation of the managing device 102 is illustrated in accordance with an embodiment of the present invention.

The managing device 102 includes a retrieving module 302, a processing module 304, and a transmitting module 306. In addition, the managing device 102 includes a discovery module 308, a reconfiguring module 310, and a memory module 312.

The retrieving module 302 is configured for retrieving the trap configuration object 200 from each managed device 104.

The processing module 304 is configured for parsing the trap configuration object 200 to determine availability of trap destination information corresponding to the managing device 102. As explained earlier, the trap destination information corresponds to one or more network parameters of the managing device 102. The processing module 304 is also configured for generating one or more configuration instructions based on availability of the trap destination information in the trap configuration object 200, that is, the processing module 304 generates appropriate configuration instructions in case the desired trap destination information corresponding to the managing device 102 is not available in the trap configuration object 200.

The transmitting module 306 is configured for transmitting the configuration instructions to the managed device 104. The trap configuration object 200 is processed in accordance with the configuration instructions such that the trap configuration object 200 includes the trap destination information corresponding to the managing device 102. Thereby, the managed device 104 is configured to send a trap message to the managing device 102.

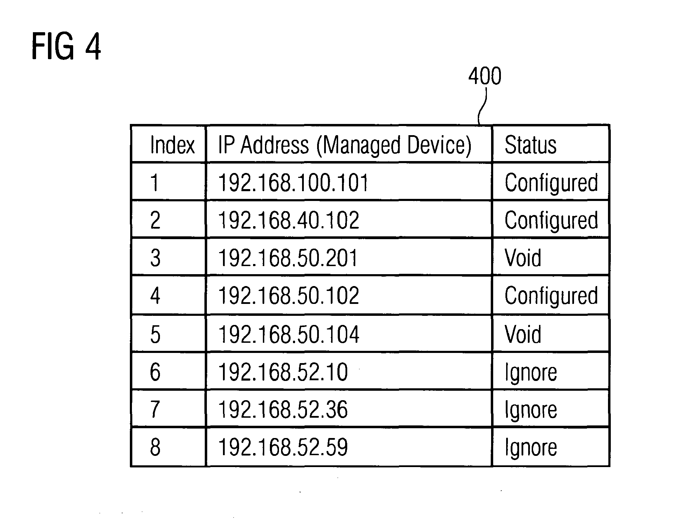

The memory module 312 stores a trap validation list. An exemplary trap validation list 400 is shown in FIG 4. As shown in FIG 4, the trap validation list 400 is in a tabular format and includes columnar variables 'Index', 'IP address/hostname', and 'Trap Validation Status'.

The trap validation list 400 includes information related to the managed devices 104 along with a corresponding trap validation status. The trap validation status is set to a first status, for example "void", to indicate that corresponding managed device 104 is to be configured to send a trap message to the managing device 102. Similarly, the trap validation status is set to a second status, for example "configured", to indicate that corresponding managed device 104 is configured to send a trap message to the managing device 102.

In addition, additional trap validation status may be defined to indicate additional status of the managed devices 104. For example, in case the managing device 102 does not intend to receive trap messages from one or more managed devices 104, the trap validation status corresponding to those managed devices 104 may be set to a third status, for example "Ignore", such that these are no longer considered for automated trap configuration procedure.

In various alternative embodiments of the present invention, the trap validation list 400 may be implemented using any suitable data structure known in the art or as may be developed in future. Further, the values depicted in FIG 4 are for exemplary purpose only and should not be construed to limit the present invention in any manner whatsoever.

Referring back to FIG 3, the discovery module 308 is configured for discovering one or more managed devices 104. Towards this end, any suitable auto-discovery technique may be used. In a specific example, the present invention uses a trap-based auto-discovery technique in addition to a more general auto-discovery technique. In general, various auto-discovery techniques are well-known in the art and are not being described herein for the sake of brevity.

Subsequent to discovering a new managed device 104, the discovery module 308 appends corresponding information to the trap validation list 400. When a new entry is added to the trap validation list 400, the corresponding trap validation status is set to the first status ("void") to indicate that the corresponding managed device 104 is to be configured for trap information.

The reconfiguring module 310 is configured for monitoring one or more network parameters of the managing device, and changing the trap validation status for each managed device 104 in the second status in the trap validation list 400 from the second status to the first status subsequent to an alteration of such one or more network parameters of the managing device 102 that are related to the trap destination information.

During operation of the network management system 100, the processing module 304 monitors the trap validation list 400. When one or more managed devices 104 are set to the first status "void". The processing module 304 triggers an automated trap configuration procedure in accordance with techniques of the present invention.

When the automated trap configuration procedure is initiated, the retrieving module 302 successively retrieves the trap configuration object 200 for each managed device 104 for which the trap validation status in the trap validation list 400 is set to the first status ("void").

The processing module 304 parses the trap configuration object 200 and generates appropriate configuration instructions. It should be noted that in case the trap destination information corresponding to the managing device 102 is already included in the trap configuration object 200, the managing device 102 does not send any configuration instructions to the managed device 104. However, the processing module 304 updates the trap validation list 400 in the memory module 312 such that the trap validation status corresponding to the managed device 104 is updated to the second status ("configured").

The transmitting module 306 transmits the configuration instructions to the managed device 104. The managed device 104 suitably processes the trap configuration object 200 in accordance with the configuration instructions. The managing device 102 confirms that the managed device 104 has successfully processed the trap configuration object 200 therein.

In this regard, it should be noted that a positive confirmation is possible through an additional GET message to verify that desired trap destination information has been included in the trap configuration object 200. At the same time, as well-understood in the state of the art, if the SET message does not return any error, the managing device 102 implicitly confirms that the trap configuration object 200 has been successfully processed. Subsequently, the corresponding trap validation status in the trap validation list 400 is set to the second status ("configured").

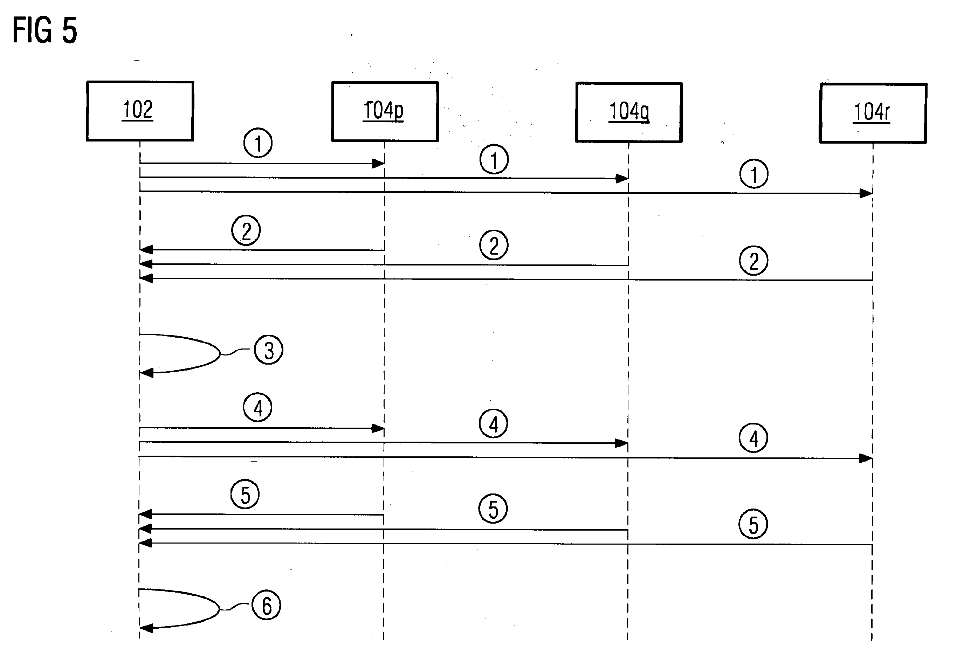

The operation of network management system 100 will now be explained in more detail with reference to FIGS 3 and 5.

FIG 5 illustrates a sequence diagram for automated trap configuration in accordance with an embodiment of the present invention.

As evident from the preceding description, the automated trap configuration procedure of the present invention is triggered based on presence of one or more managed device 104 in the trap validation list 400 with the trap validation status as the first status ("void").

The managed devices 104 are set to the first status under two conditions viz. firstly, when the managed device 104 is newly discovered by the managing device 102, and secondly, when one or more network parameters of managing device 102 are changed and reconfiguring module 310 acts to change trap validation status from the second status to the first status for each managed device 104 in the trap validation list 400.

Subsequent to an auto-discovery process, in case one or more new managed devices 104 are discovered, the corresponding information is appended to the trap validation list 400 with trap validation status as the first status ("void"). The processing module 304 then triggers the automated trap configuration procedure, which is best shown in FIG 5.

As shown in FIG 5, at Step 1, the managing device 102 sends a GET / GET-BULK message to the managed device 104 to retrieve the trap configuration object 200.

At Step 2, each managed device 104 responds with GET-RESPONSE message and provides the corresponding trap configuration object 200 to the managing device 102.

It should be noted that in case multiple managing devices 102 are implemented in the network management system 100, when an individual managing device 102 initiates the automated trap configuration for an individual managed device 104, the trap configuration object 200 in the managed device 104 is locked for access by any other managing device 102 to ensure data integrity and prevent data loss due to simultaneous access.

At Step 3, the managing device 102, more specifically, the processing module 304 parses the trap configuration object 200.

If the trap destination information corresponding to the managing device 102 is already included in the trap configuration object 200, the managing device 102 does not send any configuration instructions to the managed device 104, and accordingly, Steps 4 and 5 are skipped, and Step 6 is performed. Thus, the processing module 304 updates the trap validation list 400 in the memory module 312 such that the trap validation status corresponding to the managed device 104 is updated to the second status ("configured").

On the other hand, in case the trap configuration object 200 does not include the trap destination information corresponding to the managing device 102, Step 4 is performed.

At Step 4, the processing module 304 generates a set of configuration instructions, to create an additional row/entry in the trap configuration object 200 stored in the managed device 104 and set the attributes according to the one or more network parameters of the managing device 102. The techniques for appending additional row in a tabular object are well-known in the art and hence, are not being described here in detail.

In accordance with a technical feature of the present invention, in case the managing device 102 is addressable using multiple values for a network attribute, the processing module 304 selects the most optimum value for the network attribute based on a suitable algorithm. For example, in case the managing device 102 includes multiple network-interface cards (NIC), the managing device 102 is addressable using multiple IP addresses. In this case, the processing module 304 selects the IP address which provides the most optimum routing path based on the IP address of the managed device 104.

At Step 5, the managed device 104, in turn, provides a confirmation message to the managing device 102 to confirm that the trap configuration object 200 has been suitably modified to include trap destination information corresponding to the managing device 102. As mentioned earlier, at step 5, a positive confirmation is possible through an additional GET message to verify that desired trap destination information has been included in the trap configuration object 200. At the same time, as well-understood in the state of the art, if the SET message does not return any error within a specified time interval, the managing device 102 implicitly confirms that the trap configuration object 200 has been successfully processed.

At Step 6, the processing module 304 accordingly updates the trap validation status corresponding to the managed device 104 in the trap validation list 400 to the second status ("configured").

Similarly, when one or more network parameters of the managing device 102 are altered, the reconfiguring module 310 changes the trap validation status for each managed device 104 in the trap validation list 400 from the second status to the first status. The processing module 304 then triggers the automated trap configuration in a similar manner as described above. The corresponding set of interactions between the managing device 102 and the managed devices 104 same as those shown in FIG 5.

As mentioned earlier, in case the managing device 102 does not intend to receive trap messages from one or more managed devices 104, the trap validation status corresponding to those managed devices 104 may be set to the third status ("Ignore"), such that these managed devices 104 are no longer considered for automated trap configuration procedure. When the processing module 304 sets the trap validation status to the third status ("Ignore"), in parallel, it generates appropriate configuration instructions and provides to the transmitting module 306. The transmitting module 306, in turn, transmits the configuration instructions to the managed device 104. The configuration instructions are such that the trap configuration object 200 is modified in such manner as to remove an entry/row corresponding to the managing device 102 from the trap configuration object 200.

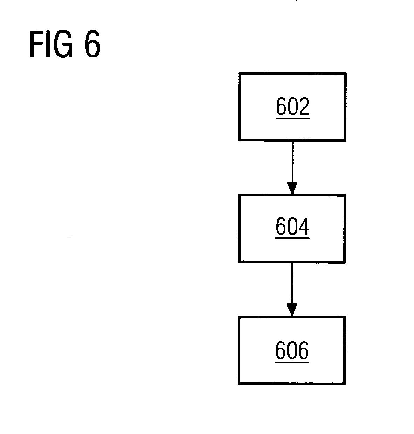

FIG 6 illustrates a basic flowchart depicting a method for automated trap configuration in a network management system in accordance with an embodiment of the present invention.

The network management system includes at least one managing device and one or more managed devices. Each managed device is configurable for sending a trap message to the at least one managing device.

At step 602, a trap configuration object is retrieved from at least one managed device. The trap configuration object includes trap destination information corresponding to one or more network parameters related to the managing device.

At step 604, the trap configuration object is parsed to determine availability of trap destination information corresponding to the managing device. As mentioned earlier, the trap destination information corresponds to one or more network parameters of the managing device.

At step 606, one or more configuration instructions from the managing device are transmitted to the at least one managed device based on availability of the trap destination information. The configuration instructions are such that the trap configuration object is processed such as to include the trap destination information corresponding to the managing device. In case the trap configuration object already includes the trap destination information corresponding to the managing device, no configuration instructions are sent to the managed device. Otherwise, the configuration instructions ensure that the trap configuration object is appropriately modified to include the trap destination information corresponding to the managing device. Thus, the at least one managed device is configured to send a trap message to the managing device.

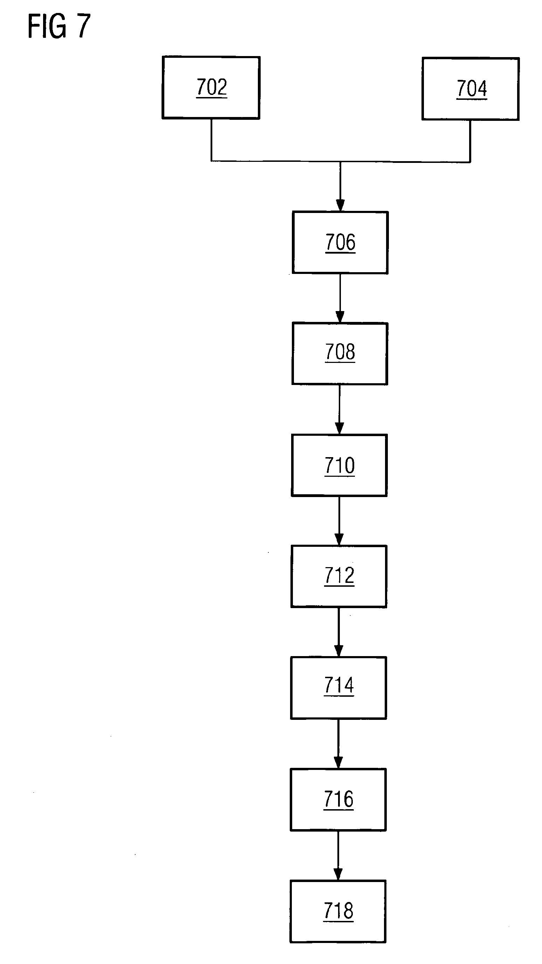

FIG 7 illustrates a detailed flowchart depicting a method for automated trap configuration in a network management system in accordance with an embodiment of the present invention.

As described in conjunction with the preceding description, each managing device maintains a trap validation list. The trap validation list includes a list of one or more managed devices along with a corresponding trap validation status.

The trap validation status is set to a first status such as "void" to indicate that corresponding managed device is to be configured to send a trap message to the managing device. On the other hand, the trap validation status is set to a second status such as "configured" to indicate that corresponding managed device is configured to send a trap message to the managing device. The managing device initiates automated trap configuration for all such managed devices that are set to the first status ("void").

At step 702, at least one managed device is discovered. Subsequently, at step 706, the information related to the managed device is appended to the trap validation list, and the corresponding trap validation status is set to the first status. Thus, each new managed device which is detected through an auto-discovery process is advantageously included in the trap validation list. The trap validation status of such managed device is set to the first status such that subsequently, the managing device initiates automated trap configuration therefor.

At step 704, one or more network parameters corresponding to the managing device are monitored. Subsequently, at step 706, the trap validation status for each managed device which is in the second status, the trap validation status is changed from the second status to the first status in the trap validation list subsequent to an alteration of such network parameters of the managing device that are related to the trap destination information. Thus, subsequent to any changes in network parameters thereof, the managing device advantageously re-initiates automated trap configuration for each managed device.

As might already be apparent from the preceding description, the combination of steps 702 and 706, and the combination of steps 704 and 706 are performed independently of each other.

At step 708, the trap validation list is monitored for any changes. In case the trap validation list is changed at step 706, at step 710, the automated trap configuration procedure is initiated.

When the automated trap configuration is initiated, the steps 712 through 716 are performed. The steps 712 through 716 are same as steps 602 through 606 respectively described in conjunction with the preceding figure.

Subsequent to performing steps 712 through 716, at step 718, the managing device confirms that the trap configuration object in the managed device includes trap destination information corresponding to the managing device. Accordingly, the corresponding trap validation status in the trap validation list is set to the second status.

The present invention provides a technique for automated trap configuration in individual network devices in a network management system. The technique of the present invention entirely eliminates any manual intervention in trap configuration in the network management system. Therefore, the techniques of the present invention are facilitates reducing time and effort required towards trap configuration while implementing any changes in the network management system. Hence, the present invention advantageously renders the network management system more flexible and conducive to systemic changes and restructuring.

The present invention can take the form of a computer program product comprising program modules accessible from computer-usable or computer-readable medium storing program code for use by or in connection with one or more computers, processors, or instruction execution system. For the purposes of this description, a computer-usable or computer readable medium can be any apparatus that can contain, store, communicate, propagate, or transport the program for use by or in connection with the instruction execution system, apparatus, or device. The medium can be an electronic, magnetic, optical, electromagnetic, infrared, or semiconductor system (or apparatus or device) or a propagation medium (though propagation mediums in and of themselves as signal carriers are not included in the definition of physical computer-readable medium). Examples of a physical computer-readable medium include a semiconductor or solid state memory, magnetic tape, a removable computer diskette, a random access memory (RAM), a read-only memory (ROM), a rigid magnetic disk and an optical disk, Current examples of optical disks include compact disk--read only memory (CD-ROM), compact disk--read/write (CD-R/W) and DVD. Both processors and program code for implementing each aspect of the technology can be centralized or distributed (or a combination thereof) as known to those skilled in the art.

A data processing system suitable for storing a computer program product of the present technology and for executing the program code of the computer program product will include at least one processor coupled directly or indirectly to memory elements through a system bus. The memory elements can include local memory employed during actual execution of the program code, bulk storage, and cache memories that provide temporary storage of at least some program code in order to reduce the number of times code must be retrieved from bulk storage during execution. Input/output or I/O devices (including but not limited to keyboards, displays, pointing devices, etc.) can be coupled to the system either directly or through intervening I/O controllers. Network adapters can also be coupled to the system to enable the data processing system to become coupled to other data processing systems or remote printers or storage devices through intervening private or public networks. Modems, cable modem and Ethernet cards are just a few of the currently available types of network adapters. Such systems can be centralized or distributed, e.g., in peer-to-peer and client/server configurations. In some implementations, the data processing system is implemented using GPUs, FPGAs and ASICs.

While the present invention has been described in detail with reference to certain embodiments, it should be appreciated that the present invention is not limited to those embodiments. In view of the present disclosure, many modifications and variations would present themselves, to those of skill in the art without departing from the scope of this invention. The scope of the present invention is, therefore, indicated by the following claims rather than by the foregoing description. All changes, modifications, and variations coming within the meaning and range of equivalency of the claims are to be considered within their scope.

## Claims

1. A method for automated trap configuration in a network management system (100), the network management system (100) comprising at least one managing device (102) and one or more managed devices (104), each managed device (104) configurable for sending a trap message to said at least one managing device (102), said method comprising:
(a) retrieving (602, 712) a trap configuration object (200) from at least one managed device (104),
(b) parsing (604, 714) said trap configuration object (200) to determine availability of trap destination information corresponding to said managing device (102), wherein said trap destination information corresponds to one or more network parameters of said managing device (102),
(c) transmitting (606, 716) one or more configuration instructions to said at least one managed device (104) based on availability of said trap destination information, wherein based on said configuration instructions, said trap configuration object (200) is processed such that said trap configuration object (200) comprises said trap destination information corresponding to said managing device (102), whereby said at least one managed device (104) is configured to send a trap message to said managing device (102),
(d) maintaining a trap validation list (400) in each managing device (102), wherein said trap validation list (400) comprises information related to said one or more managed devices (104) along with a corresponding trap validation status, wherein said trap validation status is set to a first status to indicate that corresponding managed device (104) is to be configured to send a trap message to said managing device (102), and further wherein said trap validation status is set to a second status to indicate that corresponding managed device (104) is configured to send a trap message to said managing device (102),
(e) each managing device initiating trap con-figuration according steps (a) through (c) for all such managed devices that are to be configured to include trap destination information corresponding to the managing device.

2. The method according to claim 1 further comprising discovering (702) at least one managed device (104), appending (706) information related to said at least one managed device (104) to said trap validation list (400), and setting (706) trap validation status corresponding to said at least one managed device (104) to said first status.

3. The method according to claim 1 or 2 further comprising monitoring (704) one or more network parameters of the managing device (102), and changing (706) said trap validation status from said second status to said first status for each managed device (104) in said trap validation list (400) subsequent to an alteration of one or more of said network parameters of said managing device (102).

4. The method according to any of claims 1 to 3, wherein steps (a) through (c) of claim 1 are performed for each managed device (104) for which said trap validation status in said trap validation list (400) is set to said first status, wherein subsequent to performing steps (a) through (c) of claim 1 for said managed device (104), and confirming that said trap configuration object (200) in said at least one managed device (104) is successfully processed, corresponding trap validation status in said trap validation list (400) is set to said second status.

5. A network management system (100) adapted for automated trap configuration, the network management system (100) comprising at least one managing device (102) and one or more managed devices (104), each managed device (104) configurable for sending a trap message to said at least one managing device (102), said managing device (102) comprising:
(a) a retrieving module (302), said retrieving module (302) configured for retrieving a trap configuration object (200) from at least one managed device (104),
(b) a processing module (304), said processing module (304) configured for parsing said trap configuration object (200) to determine availability of trap destination information corresponding to said managing device (102), wherein said trap destination information corresponds to one or more network parameters of said managing device (102), and said processing module (304) further configured for generating one or more configuration instructions based on availability of said trap destination information,
(c) a transmitting module (306), said transmitting module (306) configured for transmitting said configuration instructions to said at least one managed device (104), wherein said trap configuration object (200) is processed such that said trap configuration object (200) comprises said trap destination information corresponding to said managing device (102), whereby said at least one managed device (104) is configured to send a trap message to said managing device (102),
(d) a trap validation list (400), wherein said trap validation list (400) comprises information related to said one or more managed devices (104) along with a corresponding trap validation status, wherein said trap validation status is set to a first status to indicate that corresponding managed device (104) is to be configured to send a trap message to said managing device (102), and further wherein said trap validation status is set to a second status to indicate that corresponding managed device (104) is configured to send a trap message to said managing device (102), and further wherein the managing device is configured to initiates trap con-figuration according steps (a) through (c) for all such managed devices that are to be configured to include trap destination information corresponding to the managing device.

6. The network management system (100) according to claim 5, wherein each managing device (102) further comprises a discovery module (308), said discovery module (308) configured for discovering at least one managed device (104), appending information related to said at least one managed device (104) to said trap validation list (400), and setting trap validation status corresponding to said at least one managed device (104) to said first status.

7. The network management system (100) according to claim 5 or 6, wherein each managing device (102) further comprises reconfiguring module (310), said reconfiguring module (310) configured for monitoring one or more network parameters of the managing device (102), and wherein the processing module (304) is configured for changing said trap validation status from said second status to said first status for each managed device (104) in said trap validation list (400) subsequent to an alteration of one or more of said network parameters of said managing device (102).

8. The network management system (100) according to any of claims 5 to 7, wherein said retrieving module (302) successively retrieves said trap configuration object (200) for each managed device (104) for which said trap validation status in said trap validation list (400) is set to said first status, further wherein subsequent to transmitting said configuration instructions to said managed device (104), and confirming that said trap configuration object (200) in said at least one managed device (104) is successfully processed, corresponding trap validation status in said trap validation list (400) is set to said second status.

9. A computer program product embodied on a computer readable medium, the computer-readable medium comprising computer-executable instructions for automated trap configuration in a network management system (100), the network management system (100) comprising at least one managing device (102) and one or more managed devices (104), each managed device (104) configurable for sending a trap message to said at least one managing device (102), said computer-executable instructions comprising:
(a) program instructions for retrieving a trap configuration object (200) from at least one managed device (104),
(b) program instructions for parsing said trap configuration object (200) to determine availability of trap destination information corresponding to said managing device (102), wherein said trap destination information corresponds to one or more network parameters of said managing device (102),
(c) program instructions for transmitting one or more configuration instructions to said at least one managed device (104) based on availability of said trap destination information, wherein based on said instructions, said trap configuration object (200) is processed such that said trap configuration object (200) comprises said trap destination information corresponding to said managing device (102), whereby said at least one managed device (104) is configured to send a trap message to said managing device (102),
(d) program instructions for maintaining a trap validation list (400) in each managing device (102), wherein said trap validation list (400) comprises information related to said one or more managed devices (104) along with a corresponding trap validation status, wherein said trap validation status is set to a first status to indicate that corresponding managed device (104) is to be configured to send a trap message to said managing device (102), and further wherein said trap validation status is set to a second status to indicate that corresponding managed device (104) is configured to send a trap message to said managing device (102), and further wherein each managing device initiates trap con-figuration according steps (a) through (c) for all such managed devices that are to be configured to include trap destination information corresponding to the managing device.

10. The computer program product according to claim 9 further comprising program instructions for discovering at least one managed device (104), appending information related to said at least one managed device (104) to said trap validation list (400), and setting trap validation status corresponding to said at least one managed device (104) to said first status.

11. The computer program product according to claim 9 or 10 further comprising program instructions for monitoring one or more network parameters of the managing device (102), and changing said trap validation status from said second status to said first status for each managed device (104) in said trap validation list (400) subsequent to an alteration of one or more of said network parameters of said managing device (102).

12. The computer program product according to any of claims 9 to 11, wherein steps (a) through (c) of claim 1 are performed for each managed device (104) for which said trap validation status in said trap validation list (400) is set to said first status, wherein subsequent to performing steps (a) through (c) of claim 11 for said managed device (104), and confirming that said trap configuration object (200) in said at least one managed device (104) is successfully processed, corresponding trap validation status in said trap validation list (400) is set to said second status.

## Patentansprüche

1. Verfahren für eine automatische Trapkonfiguration in einem Netzverwaltungssystem (100), wobei das Netzverwaltungssystem (100) mindestens eine Verwaltungsvorrichtung (102) und eine oder mehrere verwaltete Vorrichtungen (104) umfasst, wobei jede verwaltete Vorrichtung (104) konfigurierbar ist, um eine Trapnachricht an mindestens eine Verwaltungsvorrichtung (102) zu senden, das Verfahren umfassend:
(a) das Abrufen (602, 712) eines Trapkonfigurationsobjekts (200) aus mindestens einer verwalteten Vorrichtung (104),
(b) das syntaktische Analysieren (604, 714) des Trapkonfigurationsobjekts (200), um die Verfügbarkeit von Informationen über das Trapziel entsprechend der Verwaltungsvorrichtung (102) zu bestimmen, wobei die Informationen über das Trapziel einem oder mehreren Netzparametern der Verwaltungsvorrichtung (102) entsprechen,
(c) das Übertragen (606, 716) von einem oder mehreren Konfigurationsbefehlen an die mindestens eine verwaltete Vorrichtung (104) aufgrund der Verfügbarkeit der Informationen über das Trapziel, wobei das Trapkonfigurationsobjekt (200) aufgrund der Konfigurationsbefehle so verarbeitet wird, dass das Trapkonfigurationsobjekt (200) die Informationen über das Trapziel entsprechend der Verwaltungsvorrichtung (102) umfasst, wobei die mindestens eine verwaltete Vorrichtung (104) ausgelegt ist, um eine Trapnachricht an die Verwaltungsvorrichtung (102) zu senden,
(d) das Führen einer Trapvalidierungsliste (400) in jeder Verwaltungsvorrichtung (102), wobei die Trapvalidierungsliste (400) Informationen in Bezug auf die eine oder mehreren verwalteten Vorrichtungen (104) zusammen mit einem entsprechenden Trapvalidierungsstatus umfasst, wobei der Trapvalidierungsstatus auf einen ersten Status gesetzt ist, um anzugeben, dass die entsprechende verwaltete Vorrichtung (104) zu konfigurieren ist, um eine Trapnachricht an die Verwaltungsvorrichtung (102) zu senden, und wobei ferner der Trapvalidierungsstatus auf einen zweiten Status gesetzt ist, um anzugeben, dass die entsprechende verwaltete Vorrichtung (104) ausgelegt wird, um eine Trapnachricht an die Verwaltungsvorrichtung (102) zu senden,
(e) wobei jede Verwaltungsvorrichtung die Trapkonfiguration gemäß den Schritten (a) bis (c) für alle verwalteten Vorrichtungen, die zu konfigurieren sind, einleitet, um Informationen über das Trapziel entsprechend der Verwaltungsvorrichtung zu enthalten.

2. Verfahren nach Anspruch 1, ferner umfassend das Erkennen (702) mindestens einer verwalteten Vorrichtung (104), das Hinzufügen (706) von Informationen betreffend die mindestens eine verwaltete Vorrichtung (104) zur Trapvalidierungsliste (400) und das Setzen (706) des Trapvalidierungsstatus entsprechend der mindestens einen verwalteten Vorrichtung (104) auf den ersten Status.

3. Verfahren nach Anspruch 1 oder 2, ferner umfassend das Überwachen (704) eines oder mehrerer Netzparameter der Verwaltungsvorrichtung (102) und das Ändern (706) des Trapvalidierungsstatus vom zweiten Status auf den ersten Status für jede verwaltete Vorrichtung (104) in der Trapvalidierungsliste (400) nach einer Änderung eines oder mehrerer Netzparameter der Verwaltungsvorrichtung (102).

4. Verfahren nach einem der Ansprüche 1 bis 3, wobei die Schritte (a) bis (c) des Anspruchs 1 für jede verwaltete Vorrichtung (104) durchgeführt werden, für welche der Trapvalidierungsstatus in der Trapvalidierungsliste (400) auf den ersten Status gesetzt ist, wobei nach dem Ausführen der Schritte (a) bis (c) des Anspruchs 1 für die verwaltete Vorrichtung (104) und dem Bestätigen, dass das Trapkonfigurationsobjekt (200) in der mindestens einen verwalteten Vorrichtung (104) erfolgreich verarbeitet wurde, der entsprechende Trapvalidierungsstatus in der Trapvalidierungsliste (400) auf den zweiten Status gesetzt wird.

5. Netzverwaltungssystem (100), das geeignet ist für eine automatische Trapkonfiguration, wobei das Netzverwaltungssystem (100) mindestens eine Verwaltungsvorrichtung (102) und eine oder mehrere verwaltete Vorrichtungen (104) umfasst, wobei jede verwaltete Vorrichtung (104) konfigurierbar ist, um eine Trapnachricht an die mindestens eine Verwaltungsvorrichtung (102) zu senden, die Verwaltungsvorrichtung (102) umfassend:
(a) ein Abrufmodul (302), wobei das Abrufmodul (302) ausgelegt ist, um ein Trapkonfigurationsobjekt (200) aus der mindestens einen verwalteten Vorrichtung (104) abzurufen,
(b) ein Verarbeitungsmodul (304), wobei das Verarbeitungsmodul (304) ausgelegt ist, um das Trapkonfigurationsobjekt (200) syntaktisch zu analysieren, um die Verfügbarkeit von Informationen über das Trapziel entsprechend der Verwaltungsvorrichtung (102) zu bestimmen, wobei die Informationen über das Trapziel einem oder mehreren Netzparametern der Verwaltungsvorrichtung (102) entsprechen, und das Verarbeitungsmodul (304) ferner ausgelegt ist, um einen oder mehrere Konfigurationsbefehle aufgrund der Verfügbarkeit der Informationen über das Trapziel zu erzeugen,
(c) ein Übertragungsmodul (306), wobei das Übertragungsmodul (306) ausgelegt ist, um die Konfigurationsbefehle an die mindestens eine verwaltete Vorrichtung (104) zu übertragen, wobei das Trapkonfigurationsobjekt (200) so verarbeitet wird, dass das Trapkonfigurationsobjekt (200) die Informationen über das Trapziel entsprechend der Verwaltungsvorrichtung (102) umfasst, wobei die mindestens eine verwaltete Vorrichtung (104) ausgelegt ist, um eine Trapnachricht an die Verwaltungsvorrichtung (102) zu senden,
(d) eine Trapvalidierungsliste (400), wobei die Trapvalidierungsliste (400) Informationen in Bezug auf die eine oder mehreren verwalteten Vorrichtungen (104) zusammen mit einem entsprechenden Trapvalidierungsstatus umfasst, wobei der Trapvalidierungsstatus auf einen ersten Status gesetzt ist, um anzugeben, dass die entsprechende verwaltete Vorrichtung (104) zu konfigurieren ist, um eine Trapnachricht an die Verwaltungsvorrichtung (102) zu senden, und wobei ferner der Trapvalidierungsstatus auf einen zweiten Status gesetzt ist, um anzugeben, dass die entsprechende verwaltete Vorrichtung (104) ausgelegt wird, um eine Trapnachricht an die Verwaltungsvorrichtung (102) zu senden, und wobei ferner die Verwaltungsvorrichtung ausgelegt ist, um die Trapkonfiguration gemäß den Schritten (a) bis (c) für alle verwalteten Vorrichtungen einzuleiten, die zu konfigurieren sind, um Informationen über das Trapziel entsprechend der Verwaltungsvorrichtung zu enthalten.

6. Netzverwaltungssystem (100) nach Anspruch 5, wobei jede Verwaltungsvorrichtung (102) ferner ein Erkennungsmodul (308) umfasst, wobei das Erkennungsmodul (308) ausgelegt ist, um mindestens eine verwaltete Vorrichtung (104) zu erkennen, Informationen betreffend die mindestens eine verwaltete Vorrichtung (104) zur Trapvalidierungsliste (400) hinzuzufügen und den Trapvalidierungsstatus entsprechend der mindestens einen verwalteten Vorrichtung (104) auf den ersten Status zu setzen.

7. Netzverwaltungssystem (100) nach Anspruch 5 oder 6, wobei jede Verwaltungsvorrichtung (102) ferner ein Rekonfigurationsmodul (310) umfasst, wobei das Rekonfigurationsmodul (310) ausgelegt ist, um einen oder mehrere Netzparameter der Verwaltungsvorrichtung (102) zu überwachen, und wobei das Verarbeitungsmodul (304) ausgelegt ist, um den Trapvalidierungsstatus vom zweiten Status auf den ersten Status für jede verwaltete Vorrichtung (104) in der Trapvalidierungsliste (400) nach einer Änderung eines oder mehrerer Netzparameter der Verwaltungsvorrichtung (102) zu ändern.

8. Netzverwaltungssystem (100) nach einem der Ansprüche 5 bis 7, wobei das Abrufmodul (302) nacheinander das Trapkonfigurationsobjekt (200) für jede verwaltete Vorrichtung (104), für welche der Trapvalidierungsstatus in der Trapvalidierungsliste (400) auf den ersten Status gesetzt ist, abruft, wobei ferner, nach dem Übermitteln der Konfigurationsbefehle an die verwaltete Vorrichtung (104) und dem Bestätigen, dass das Trapkonfigurationsobjekt (200) in der mindestens einen verwalteten Vorrichtung (104) erfolgreich verarbeitet wurde, der entsprechende Trapvalidierungsstatus in der Trapvalidierungsliste (400) auf den zweiten Status gesetzt wird.

9. Computerprogrammprodukt, das auf einem computerlesbaren Medium verkörpert ist, wobei das computerlesbare Medium computerausführbare Befehle für die automatische Trapkonfiguration in einem Netzverwaltungssystem (100) umfasst, wobei das Netzverwaltungssystem (100) mindestens eine Verwaltungsvorrichtung (102) und eine oder mehrere verwaltete Vorrichtungen (104) umfasst, wobei jede verwaltete Vorrichtung (104) konfigurierbar ist, um eine Trapnachricht an die mindestens eine Verwaltungsvorrichtung (102) zu senden, die computerausführbaren Befehle umfassend:
(a) Programmbefehle zum Abrufen eines Trapkonfigurationsobjekts (200) aus mindestens einer verwalteten Vorrichtung (104),
(b) Programmbefehle zum syntaktischen Analysieren des Trapkonfigurationsobjekts (200), um die Verfügbarkeit von Informationen über das Trapziel entsprechend der Verwaltungsvorrichtung (102) zu bestimmen, wobei die Informationen über das Trapziel einem oder mehreren Netzparametern der Verwaltungsvorrichtung (102) entsprechen,
(c) Programmbefehle zum Übertragen von einem oder mehreren Konfigurationsbefehlen an die mindestens eine verwaltete Vorrichtung (104) aufgrund der Verfügbarkeit der Informationen über das Trapziel, wobei das Trapkonfigurationsobjekt (200) aufgrund der Befehle so verarbeitet wird, dass das Trapkonfigurationsobjekt (200) die Informationen über das Trapziel entsprechend der Verwaltungsvorrichtung (102) enthält, wobei die mindestens eine verwaltete Vorrichtung (104) ausgelegt ist, um eine Trapnachricht an die Verwaltungsvorrichtung (102) zu senden,
(d) Programmbefehle zum Führen einer Trapvalidierungsliste (400) in jeder Verwaltungsvorrichtung (102), wobei die Trapvalidierungsliste (400) Informationen in Bezug auf die eine oder mehreren verwalteten Vorrichtungen (104) zusammen mit einem entsprechenden Trapvalidierungsstatus umfasst, wobei der Trapvalidierungsstatus auf einen ersten Status gesetzt ist, um anzugeben, dass die entsprechende verwaltete Vorrichtung (104) zu konfigurieren ist, um eine Trapnachricht an die Verwaltungsvorrichtung (102) zu senden, und wobei ferner der Trapvalidierungsstatus auf einen zweiten Status gesetzt ist, um anzugeben, dass die entsprechende verwaltete Vorrichtung (104) ausgelegt wird, um eine Trapnachricht an die Verwaltungsvorrichtung (102) zu senden, und wobei ferner jede Verwaltungsvorrichtung die Trapkonfiguration gemäß den Schritten (a) bis (c) für alle verwalteten Vorrichtungen einleitet, die zu konfigurieren sind, um Informationen über das Trapziel entsprechend der Verwaltungsvorrichtung zu enthalten.

10. Computerprogrammprodukt nach Anspruch 9, ferner umfassend Programmbefehle zum Erkennen von mindestens einer verwalteten Vorrichtung (104), zum Hinzufügen von Informationen betreffend die mindestens eine verwaltete Vorrichtung (104) zur Trapvalidierungsliste (400) und zum Setzen des Trapvalidierungsstatus entsprechend der mindestens einen verwalteten Vorrichtung (104) auf den ersten Status.

11. Computerprogrammprodukt nach Anspruch 9 oder 10, ferner umfassend Programmbefehle zum Überwachen eines oder mehrerer Netzparameter der Verwaltungsvorrichtung (102) und zum Ändern des Trapvalidierungsstatus vom zweiten Status auf den ersten Status für jede verwaltete Vorrichtung (104) in der Trapvalidierungsliste (400) nach einer Änderung eines oder mehrerer Netzparameter der Verwaltungsvorrichtung (102).

12. Computerprogrammprodukt nach einem der Ansprüche 9 bis 11, wobei die Schritte (a) bis (c) des Anspruchs 1 für jede verwaltete Vorrichtung (104) durchgeführt werden, für welche der Trapvalidierungsstatus in der Trapvalidierungsliste (400) auf den ersten Status gesetzt ist, wobei nach dem Ausführen der Schritte (a) bis (c) von Anspruch 11 für die verwaltete Vorrichtung (104), und dem Bestätigen, dass das Trapkonfigurationsobjekt (200) in der mindestens einen verwalteten Vorrichtung (104) erfolgreich verarbeitet wurde, der entsprechende Trapvalidierungsstatus in der Trapvalidierungsliste (400) auf den zweiten Status gesetzt wird.

## Revendications

1. Procédé de configuration de piège automatisée dans un système ( 100 ) de gestion de réseau, le système ( 100 ) de gestion de réseau comprenant au moins un dispositif ( 102 ) gérant et un ou plusieurs dispositifs ( 104 ) gérés, chaque dispositif ( 104 ) géré pouvant être configuré pour envoyer un message de piège au au moins un dispositif ( 102 ) gérant, procédé dans lequel :
(a) on extrait ( 602, 712 ) un objet ( 200 ) de configuration de piège d'au moins un dispositif ( 104 ) géré,
(b) on fait une analyse syntaxique ( 604, 714 ) de l'objet ( 200 ) de configuration de piège pour déterminer une disponibilité d'une information de destination de piège correspondant au dispositif ( 102 ) gérant, l'information de destination de piège correspondant à un ou à plusieurs paramètres de réseau du dispositif ( 102 ) gérant,
(c) on transmet ( 606, 716 ) une ou plusieurs instructions de configuration au au moins un dispositif ( 104 ) géré sur la base de la disponibilité de l'information de destination de piège, dans lequel, sur la base des instructions de configuration, on traite l'objet ( 200 ) de configuration de piège, de manière à ce que l'objet ( 200 ) de configuration de piège comprenne l'information de destination de piège correspondant à ce dispositif ( 102 ) gérant, le au moins un dispositif ( 104 ) géré étant configuré pour envoyer un message de piège au dispositif ( 102 ) gérant,
(d) on maintient une liste ( 400 ) de validation de piège dans chaque dispositif ( 102 ) gérant, la liste ( 400 ) de validation de piège comprenant de l'information se rapportant audit un ou plusieurs dispositifs ( 104 ) gérés en même temps qu'un état de validation de piège correspondant, l'état de validation de piège étant fixé à un premier état pour indiquer que le dispositif ( 104 ) géré correspondant doit être configuré pour envoyer un message de piège au dispositif ( 102 ) gérant, et dans lequel, en outre, l'état de validation de piège est fixé à un deuxième état pour indiquer que le dispositif ( 104 ) géré correspondant est configuré pour envoyer un message de piège au dispositif ( 102 ) gérant,
(e) chaque dispositif gérant fait débuter une configuration de piège suivant les stades (a) à (c) pour tous les dispositifs gérés, qui doivent être configurés pour inclure une information de destination de piège correspondant au dispositif gérant.

2. Procédé suivant la revendication 1, dans lequel, en outre, on trouve ( 702 ) au moins un dispositif ( 104 ) géré, on adjoint ( 706 ) de l'information se rapportant à ce au moins un dispositif ( 104 ) géré à la liste ( 400 ) de validation de piège et on met ( 706 ) l'état de validation de piège correspondant à ce au moins un dispositif ( 104 ) géré au premier état.

3. Procédé suivant la revendication 1 ou 2, dans lequel, en outre, on contrôle ( 704 ) un ou plusieurs paramètres de réseau du dispositif ( 102 ) gérant et on change ( 706 ) l'état de validation de piège en le faisant passer du deuxième état au premier état pour chaque dispositif ( 104 ) géré de la liste ( 400 ) de validation de piège à la suite d'une modification d'un ou de plusieurs des paramètres de réseau du dispositif ( 102 ) gérant.

4. Procédé suivant l'une quelconque des revendications 1 à 3, dans lequel on effectue les stades (a) à (c) de la revendication 1 pour chaque dispositif ( 104 ) géré pour lequel l'état de validation de piège dans la liste ( 400 ) de validation de piège est mis au premier état, dans lequel, après avoir effectué les stades (a) à (c) de la revendication 1 pour le dispositif ( 104 ) géré et avoir confirmé que l'objet ( 200 ) de configuration de piège dans ce au moins un dispositif géré est traité avec succès, un état correspondant de validation de piège dans la liste ( 400 ) de validation de piège est mis au deuxième état.

5. Système ( 100 ) de gestion de réseau conçu pour une configuration de piège automatisée, le système ( 100 ) de gestion de réseau comprenant au moins un dispositif ( 102 ) gérant et un ou plusieurs dispositifs ( 104 ) gérés, chaque dispositif ( 104 ) géré pouvant être configuré pour envoyer un message de piège au au moins un dispositif ( 102 ) gérant, le dispositif ( 102 ) gérant comprenant :
(a) un module ( 302 ) d'extraction, le module ( 302 ) d'extraction étant configuré pour extraire un objet ( 200 ) de configuration de piège du au moins un dispositif ( 104 ) géré,
(b) un module ( 304 ) de traitement, le module ( 304 ) de traitement étant configuré pour faire l'analyse syntaxique de l'objet ( 200 ) de configuration de piège afin de déterminer une disponibilité d'une information de destination de piège correspondant au dispositif ( 102 ) gérant, l'information de destination de piège correspondant à un ou plusieurs paramètres de réseau du dispositif ( 102 ) gérant, et le module ( 304 ) de traitement étant configuré, en outre, pour produire une ou plusieurs instructions de configuration sur la base de la disponibilité de l'information de destination de piège,
(c) un module ( 306 ) de transmission, le module ( 306 ) de transmission étant configuré pour transmettre les instructions de configuration à ce au moins un dispositif ( 104 ) géré, l'objet ( 200 ) de configuration de piège étant traité de manière à ce que l'objet ( 200 ) de configuration de piège comprenne l'information de destination de piège correspondant au dispositif ( 102 ) gérant, le au moins un dispositif ( 104 ) géré étant configuré pour envoyer un message de piège au dispositif ( 102 ) gérant,
(d) une liste ( 400 ) de validation de piège, la liste ( 400 ) de validation de piège comprenant de l'information se rapportant à ces un ou plusieurs dispositifs ( 104 ) gérés en même temps qu'un état correspondant de validation de piège, l'état de validation de piège étant mis à un premier état pour indiquer qu'un dispositif ( 104 ) géré correspondant doit être configuré pour envoyer un message de piège au dispositif ( 102 ) gérant, et dans lequel, en outre, l'état de validation de piège est mis à un deuxième état pour indiquer qu'un dispositif ( 104 ) géré correspondant est configuré pour envoyer un message de piège au dispositif ( 102 ) gérant, et dans lequel, en outre, le dispositif gérant est configuré pour faire débuter une configuration de piège suivant les stades (a) à (c) pour tous les dispositifs gérés qui doivent être configurés pour inclure une information de destination de piège correspondant au dispositif gérant.

6. Système ( 100 ) de gestion de réseau suivant la revendication 5, dans lequel chaque dispositif ( 102 ) gérant comprend, en outre, un module ( 308 ) de découverte, ce module ( 308 ) de découverte étant configuré pour trouver au moins un dispositif ( 104 ) géré pour adjoindre de l'information se rapportant à ce au moins un dispositif ( 104 ) géré à la liste ( 400 ) de validation de piège et pour mettre au premier état l'état de validation de piège correspondant à ce au moins un dispositif ( 104 ) géré.

7. Système ( 100 ) de gestion de réseau suivant la revendication 5 ou 6, dans lequel chaque dispositif ( 102 ) gérant comprend, en outre, un module ( 310 ) de reconfiguration, le module ( 310 ) de reconfiguration étant configuré pour contrôler un ou plusieurs paramètres de réseau du dispositif ( 102 ) gérant, et dans lequel le module ( 304 ) de traitement est configuré pour changer l'état de validation de piège en le faisant passer du deuxième état au premier état pour chaque dispositif ( 104 ) géré dans la liste ( 400 ) de validation de piège à la suite d'une modification d'un ou de plusieurs des paramètres de réseau du dispositif ( 102 ) gérant.

8. Système ( 100 ) de gestion de réseau suivant l'une quelconque des revendications 5 à 7, dans lequel le module ( 302 ) d'extraction extrait successivement l'objet ( 200 ) de configuration de piège pour chaque dispositif ( 104 ) géré, pour lequel l'état de validation de piège dans la liste ( 400 ) de validation de piège est mis au premier état, dans lequel, en outre, après la transmission des instructions de configuration au dispositif ( 104 ) géré et la confirmation que l'objet ( 200 ) de configuration de piège dans le au moins un dispositif ( 104 ) géré est traité avec succès, l'état correspondant de validation de piège dans la liste ( 400 ) de validation de piège est mis au deuxième étage.

9. Produit de programme d'ordinateur incorporé sur un support pouvant être exploité par un ordinateur, comprenant des instructions pouvant être exécutées par un ordinateur de configuration de piège automatisée dans un système ( 100 ) de gestion de réseau, le système ( 100 ) de gestion de réseau comprenant au moins un dispositif ( 102 ) gérant et un ou plusieurs dispositifs ( 104 ) gérés, chaque dispositif ( 104 ) géré pouvant être configuré pour envoyer un message de piège à ce au moins un dispositif ( 102 ) gérant, les instructions pouvant être exécutées par un ordinateur comprenant :
(a) des instructions de programme pour extraire un objet ( 200 ) de configuration de piège d'au moins un dispositif ( 104 ) géré,
(b) des instructions de programme pour l'analyse syntaxique de l'objet ( 200 ) de configuration de piège afin de déterminer une disponibilité d'une information de destination de piège correspondant au dispositif ( 102 ) gérant, l'information de destination de piège correspondant à un ou à plusieurs paramètres de réseau du dispositif ( 102 ) gérant,
(c) des instructions de programme pour transmettre une ou plusieurs instructions de configuration au au moins un dispositif ( 104 ) géré sur la base de la disponibilité de l'information de destination de piège, dans lequel, sur la base de ces instructions, l'objet ( 200 ) de configuration de piège est traité de manière à ce que l'objet ( 200 ) de piège comprenne l'information de destination de piège correspondant au dispositif ( 102 ) gérant, le au moins un dispositif ( 104 ) gérant étant configuré pour envoyer un message de piège au dispositif ( 102 ) gérant,
(d) des instructions de programme pour maintenir une liste ( 400 ) de validation de piège dans chaque dispositif ( 102 ) gérant, la liste ( 400 ) de validation de piège comprenant de l'information se rapportant à ces un ou plusieurs dispositifs ( 104 ) gérés en même temps qu'un état correspondant de validation de piège, l'état de validation de piège étant mis à un premier état pour indiquer qu'un dispositif ( 104 ) géré correspondant doit être configuré pour envoyer un message de piège au dispositif ( 102 ) gérant et dans lequel, en outre, l'état de validation de piège est mis à un deuxième état pour indiquer qu'un dispositif ( 104 ) géré correspondant est configuré pour envoyer un message de piège au dispositif ( 102 ) gérant, et dans lequel, en outre, chaque dispositif gérant fait débuter une configuration de piège suivant les stades (a) à (c) pour tous les dispositifs gérés qui doivent être configurés pour inclure une information de destination de piège correspondant au dispositif gérant.

10. Produit de programme d'ordinateur suivant la revendication 9, comprenant, en outre, des instructions de programme pour trouver au moins un dispositif ( 104 ) géré pour adjoindre de l'information se rapportant à ce au moins un dispositif ( 104 ) géré à la liste ( 400 ) de validation de piège et pour mettre au premier état l'état de validation de piège correspondant à ce au moins un dispositif ( 104 ) géré.

11. Produit de programme d'ordinateur suivant la revendication 9 ou 10, comprenant, en outre, des instructions de programme pour contrôler un ou plusieurs paramètres de réseau du dispositif ( 102 ) gérant et pour faire passer l'état de validation de piège du deuxième état au premier état pour chaque dispositif ( 104 ) géré de la liste ( 400 ) de validation de piège à la suite d'une modification d'un ou plusieurs des paramètres de réseau du dispositif ( 102 ) gérant.

12. Produit de programme d'ordinateur suivant l'une quelconque des revendications 9 à 11, dans lequel les stades (a) à (c) de la revendication 1 sont effectués pour chaque dispositif ( 104 ) gérés, pour lesquels l'état de validation de piège dans la liste ( 400 ) de validation de piège est mis au premier état, dans lequel, après avoir effectué les stades (a) à (c) de la revendication 11 pour ce dispositif ( 104 ) géré et après avoir confirmé que l'objet ( 200 ) de configuration de piège, dans ce au moins un dispositif ( 104 ) géré, est traité avec succès, l'état correspondant de validation de piège, dans la liste ( 400 ) de validation de piège, est mis au deuxième état.
